(19) Europäisches Patentamt

European Patent Office

Office européen des brevets

(11) **EP 1 131 956 B1**

(12) **EUROPEAN PATENT SPECIFICATION**

(45) Date of publication and mention
of the grant of the patent:
**22.09.2004 Bulletin 2004/39**

(21) Application number: **99952814.4**

(22) Date of filing: **20.10.1999**

(51) Int Cl.⁷: $H04N\ 7/32$, $H04N\ 7/50$

(86) International application number:
**PCT/NO1999/000316**

(87) International publication number:
**WO 2000/025521 (04.05.2000 Gazette 2000/18)**

(54) **A METHOD FOR COMPRESSING PICTURES AND VIDEO SEQUENCES IN A DIGITAL FORMAT**

VERFAHREN ZUR KOMPRESSION VON BILDERN UND BILDSEQUENZEN IM DIGITALEN
FORMAT

PROCEDE DE COMPRESSION D'IMAGES ET DE SEQUENCES VIDEO EN FORMAT NUMERIQUE

(84) Designated Contracting States:
**AT BE CH CY DE DK ES FI FR GB GR IE IT LI LU
MC NL PT SE**

(30) Priority: **23.10.1998 NO 984942**

(43) Date of publication of application:
**12.09.2001 Bulletin 2001/37**

(73) Proprietor: **Telenor AS
0130 Oslo (NO)**

(72) Inventor: **BJONTEGAARD, Gisle
N-1415 Oppegaerd (NO)**

(74) Representative: **Finnie, Peter John
Gill Jennings & Every,
Broadgate House,
7 Eldon Street
London EC2M 7LH (GB)**

(56) References cited:
**US-A- 5 400 075**    **US-A- 5 402 244**

**Description**

The present invention relates to a method for compressing pictures and video sequences in a digital form, which method is of the kind that appears from the preamble of the appended independent claim 1.

Most information types surrounding us are described in a digital format, to an increasing degree. One important reason therefore is the fast development within the field of computer technology. Pictures, and in particular live pictures or video, are among the last information types for which digital technology has been adopted. As regards digitizing of video, the start was late, partly due to the large amounts of data that result from digitizing. As an example, digitizing standard TV signals results in data rates of more than 200 Mbit per second (200 Mbps). This means e.g. that a data disc capable of accommodating 4 GigaByte, can store approximately 2 minutes of digital TV. This shows that the amount of data resulting from direct and unchanged digitizing of TV signals, is too large for practical use, even with today's storage media.

In order to remedy this situation, digital compression methods for video have been introduced. In this manner it is possible to represent digital video using an amount of bits that is far less than what was mentioned above. It has turned out that compression technology has become increasingly more common in use for standard TV and video conferences, as well as picture telephony, and lately also when using video in a multimedia context.

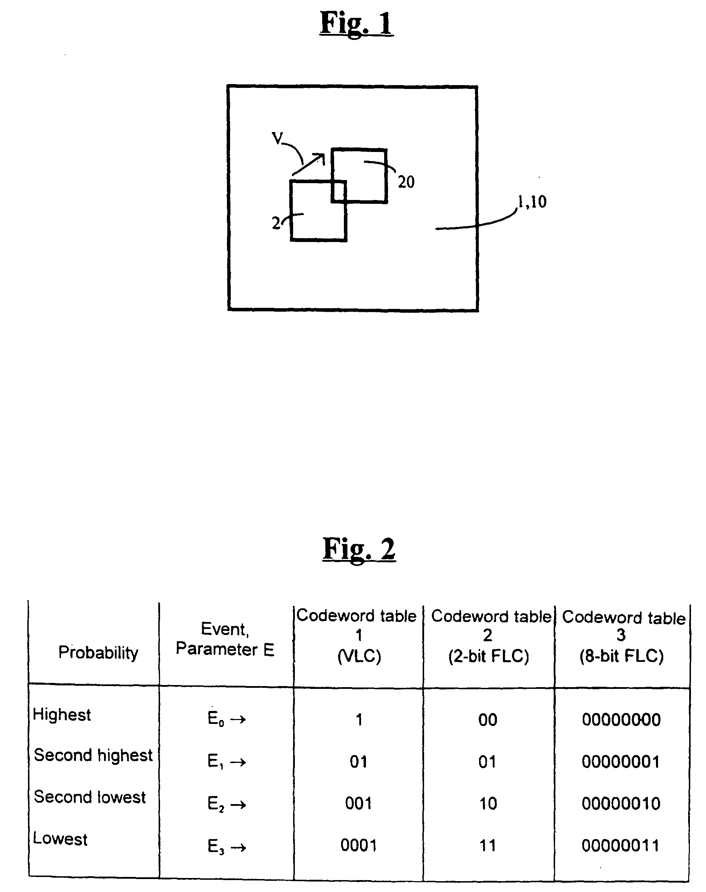

Little by little, many methods for compressing digital video have come into existence. Some of these methods have been published as standards in ISO/ISC (11172 and 13818) and ITU (H.261, H.262, H.263). Many of the methods are structured in accordance with a scheme that can be characterized in a manner such as appears in the appended fig. 1. Fig. 1 shows a picture 10, and in the same place the previous picture 1. Such pictures are usually divided into blocks 2, 20 of 8x8 or 16x16 pixels. In order to describe a block 20 in a current picture 10, partly information from earlier pictures (e.g. from the previous picture 1) is used, and partly information that is specific for the prevailing block 20.

As regards use of information from earlier pictures, e.g. picture 1, often a vector V is used, which vector indicates how many pixels - horizontally and vertically - the contents have moved from e.g. the previous picture 1. In this manner, generally a prediction results for the prevailing block 20 from the contents of earlier pictures, the prediction sometimes being very simple, for instance simply a block 2 in the previous picture 1.

Since it is a rare occurrence that the prediction 2 is good enough to represent alone block 20, the deviation from the prediction 2 is sent along as extra information.

In order to make a complete encoding method based on these main elements, one will finally describe the video contents by means of about ten different parameters. Each one of these parameters may adopt a set of values. As an example, information about the movement of pixels in a block from one picture to the next, can be investigated, and the parameter describing this movement may be named "V". Possible values may be e.g. from 30 pixels to the left, to 30 pixels to the right, or as numerical values: -30 to +30. Hence, 61 possible values for V exist. This parameter can then e.g. be encoded by means of 6 bits, accommodating $2^6 = 64$ possible values.

The values that V may adopt, i.e. from -30 to +30, may not be uniformly distributed. Let us assume that the value 0 is much more probable than any other value (value "0" may indicate that there has been no movement from the previous picture). Similarly, the largest numerical values may have very small probability. Considering as a main point that it is important to reduce bit consumption in parameter value indication, a previously known signal processing technique is utilized, in which one, instead of using 6 bits all the time for indicating V values, shifts to using short codewords for indication of the most probable values of V, and longer codewords for less probable values. One then says that a Variable Length Code (VLC) is used, instead of a Fixed Length Code (FLC) as illustrated in the 6 bits example.

It may be appropriate to elaborate somewhat on the meaning of the expressions "parameter", "value" and "event". A parameter may be a definition of a quantity that may adopt certain values. The movement vector V that is defined by the movement length (as measured in pixels) information has moved in the picture plane from one picture to the next, is an example of a parameter definition. The values of this parameter will be numbers stating the length of the movement. In a picture there will appear many measurement values for this vector parameter - for a number of blocks, and for horizontal and vertical movement. Nevertheless, as a starting point one single parameter is mentioned, however with many measurement points or values. There may also be other ways of defining the vector parameter. One may imagine that the movements of picture contents from one picture to the next is rather similar over large parts of the picture. Then the movement values for a block will probably be equal to the movement values for neighboring blocks. One may imagine that for one current block, a guess or a prediction of movement is made, based on the movement of neighboring blocks. Hence, in such a case one may define the vector parameter as the deviation from this prediction, and not the movement directly. Additionally, it may be of interest to use more than one vector parameter, for instance vertical and horizontal movement may be assigned respective vector parameters.

In other cases, a parameter may be defined as a set of quantities. One example thereof is the collection of the quantities (LEVEL, RUN, LAST) (see the discussion in the detailed description below) forming basis for a parameter definition. A value for this parameter is also often called an _event_, with the meaning that it is a set of values for the quantities (LEVEL, RUN, LAST). In the description below, the expressions "values" and "events" may not be held quite consistently apart in a context. Events/values are to be encoded by means of a VLC. Therefore, the statistics regarding events/values should be adapted to the VLC actually in use.

In the most commonly known compression techniques, there is often used a special VLC for each respective parameter, i.e. a VLC adapted to the statistics of interest for each respective parameter. Thus, the total bit stream (or collection of bits) for a video sequence will contain a complex mix of bits related to a number of VLCs, typically more than ten such VLCs.

Now and then it may happen that errors occur in a bit stream that is transferred. This means that at the receiving end, erroneous codewords will be decoded. Using existing methods such as mentioned above, in which several VLCs are used for the different parameters transferred, one must then, when an error has occurred, first locate certain synchronization words in the bit stream, before it is possible to utilize the rest of the bit stream again.

Further, the interpretation of the information regarding a picture is relatively complicated using existing methods, since several VLCs are used, and only the interpretation of earlier codewords in the bit stream can determine which VLC is to be used next time.

The technique of ascertaining whether a codeword has been found in the bit stream, is also complicated in the previously known methods, because up to several operations must be made to achieve this.

Hence, there exists a need for simplification of the encoding of a bit stream, in such a manner that it will be possible to re-locate the correct codewords in a bit stream faster after occurrence of an error in the stream. It is also desirable to achieve further simplifications in the points that have been mentioned above. The present invention aims at satisfying these needs.

Therefore, in accordance with the invention there is provided a method for compressing pictures and video sequences in a digital format, wherein

- each picture to be encoded, is divided into a number of blocks of a given size,
- for every block there is established a prediction by means of blocks in one or several earlier encoded pictures as well as values of at least one vector parameter indicating a location in earlier pictures for fetching data for the prediction,
- for every block, a deviation from the prediction is established, the deviation is subjected to a suitable mathematical transformation resulting in transform coefficients included in a definition of a parameter for a complete description of the deviation,
- further parameters are established to describe supplementary information for the picture, including which blocks in the picture are different from a corresponding block in the previous picture, and which blocks have information in addition to the prediction, and
- among said parameters, values are then encoded for said at least one vector parameter, the deviation parameter and possibly at least one of the further parameters, using Variable Length Coding (VLC encoding), the vector parameter, the deviation parameter and the possible at least one parameter constituting a group having a number N of parameters.

The method of the invention is characterized in that

- each respective one of the N parameters are first adapted, if necessary, for an encoding regime having only one single Variable Length Code (VLC), and
- the values possible for any of these N parameters to adopt, are encoded using this single VLC.

The invention stated above, is also stated in the appended independent claim 1. Preferred embodiments of the invention appear from the dependent claims attached thereto.

The invention will be described further in the following, with a discussion of embodiment examples and referring to the appended drawings, where

fig. 1 shows, in a simplified and generalized manner, the use of a prediction block and a movement vector from a previous to a current picture in a video sequence, as already mentioned in the introduction,
fig. 2 shows simple examples of encoding of events or parameter values, using codewords,
fig. 3 shows an example of a variable length code (VLC) of interest, and

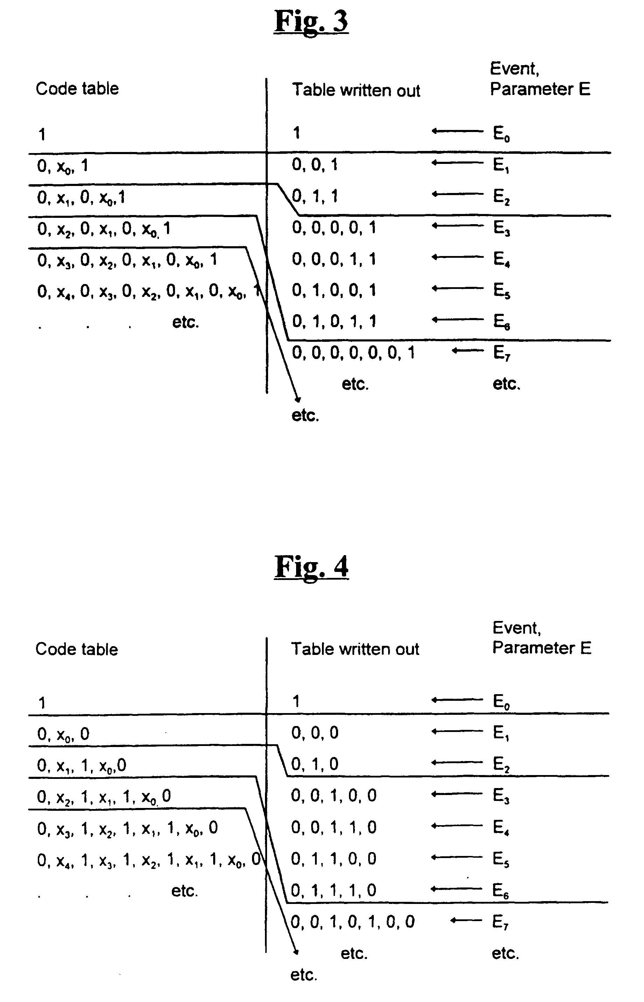

fig. 3 shows an alternative example of a VLC of interest.

The method of the invention is in many respects similar to the group of compression methods that have been described above. The main difference is that the parameter description is modified or adapted so that all parameters of interest may use one and the same VLC. This means that the parameters are described in such a manner that the statistics for associated values is approximately the same for all parameters of interest. In most of the defined standard methods, the size of quantized transformed coefficients is to be encoded. Many of these coefficients will be equal to zero. A fixed run order through these coefficients has been defined, in such a manner that statistically the largest coefficients are run through first, while many of the last coefficients are equal to zero. One objective will be an indication of the size of the coefficients not equal to zero. This can be done by encoding, for each non-zero coefficient, an "event" indicating both the size of the coefficient (LEVEL) and how many zero-coefficients have been encountered since the last non-zero coefficient (RUN). In addition, one needs to indicate which one is the last non-zero coefficient in the run, in order to avoid encoding a lot of zeros at the end of the block. For this purpose, a parameter definition having a third variable (LAST) is used in the standard H.263, which third variable (LAST) states whether a non-zero coefficient is the last coefficient in the run or not. This last variable can therefore only adopt two values (last or non-last). Therefore, an event becomes in this case a collection of values: (LEVEL, RUN, LAST). It turns out that even the most probable one of these events will occur with a probability of only about 10-20%. Other parameters among those to be encoded have a most probable event having about 50% probability. Therefore, the model using encoding of the parameter (LEVEL, RUN, LAST) is therefore poorly suited for the case in which there is a desire to use only one single VLC.

In the method proposed in the present invention, a parameter is defined by (LEVEL, RUN). In addition, there is one separate event signaling "End Of Block" (EOB). This is previously known from standards like H.261, H.262 and MPEG2. In these standards, EOB occurs as the most probable event with a probability of typically 15-30%. Using the proposed method, one will typically use smaller block sizes - for example 4x4 pixels - or even divide blocks for encoding purposes. Then, there will be fewer coefficients to be encoded in each block, and event EOB will therefore occur more often - typically with a probability 50%, and sometimes even higher. It turns out that such a model results in an event statistics that is quite similar to the corresponding statistics for movement vector data (V described above). These two parameters are therefore well suited for encoding using one and the same VLC.

As an explanatory introduction, a table showing different ways of preparing codeword tables, has been set up in fig. 2. A parameter E may have different values $E_0$, $E_1$, $E_2$, $E_3$ assigned different probabilities. The event having the highest probability, is in this case $E_0$, and $E_1$, $E_2$, and $E_3$ have successively lower probabilities of occurrence. A simple codeword table, namely table no. 2, indicates each particular one of the possible events, by means of two bits. This codeword table 2 is adapted particularly to the fact that there are four possible events. If additional possible events exist, more bits would be needed, and codeword table 3 uses eight bits, and this codeword table is therefore suitable to describe many more E values.

However, codeword table 1 has been made to take into account the probability of the different values. This is a variable length code (VLC), which code in the first place has the quality that on the whole "space will be saved" because the event having the highest probability, and consequently the most frequent occurrence, will only use one single bit. This particular VLC is adapted to a set of events occurring with probability 50%, 25%, 12,5% etc. In addition, such a code has the characteristic that it is easy to find out when a codeword has been read completely, since it is a simple matter to look for a "1" in the bit stream, and when a "1" has been found, a codeword has been read completely.

Thus, codeword table 1 in fig. 2 has been specially adapted to a probability distribution or statistics for parameter E. Other parameters may have another type of statistics associated with them, and they will then advantageously be assigned a codeword table having a different look than table 1 in fig. 2, however still of VLC type. (Examples of other VLC codes appear from fig. 3 and fig. 4.) As previously mentioned, a bit stream will then consist of sections where it is shifted from one type of encoding to another along the stream. One will need interpretation of earlier codewords in the bit stream in order to know which VLC shall be used next time. For example, there may be a MODE parameter (to be encoded using a separate VLC) where a value of MODE may indicate that in the bit stream four vectors (V) are to be expected followed by coefficient data, while another value of MODE may indicate that coefficient data are to be expected directly. Further, when a coefficient event indicates that there are more coefficient data, this is complied with, while when receiving signaling that this was the last non-zero coefficient (e.g. signaled by means of LAST), one should perhaps search for MODE information in the next code.

Hence, the idea behind the present invention is to simplify a VLC scheme in such a manner that only one code type exists for all of a number of parameters of interest. This will then mean that a certain re-defining of parameters must be made, i.e. the simplification in channel coding may have consequences for (i.e. change) the source coding.

An example of the appearance of a favorable VLC can be found in fig. 3. The code table is indicated in a general form at the left in the drawing, and it is repeated in a more directly written form further to the right. Every $X_n$ may adopt the values 0 or 1. I.e., in this current code, there is one codeword having 1 bit, two codewords having 3 bits, four codewords having 5 bits, etc., such as appears from the written table. (Typically, a parameter value having a high probability will then be assigned the shortest codeword.) A bit stream will be a collection of codewords from this table. As an example, (1 1 001 01001 011 1 00001) may be part of such a bit stream. For every codeword there will then be a translation to a parameter value $E_n$ (in an example above, vector parameter V was used as an example. Then, codeword 1 would correspond to V=0, codeword 001 would correspond to V=+1, codeword 011 would correspond to V=-1 etc.).

Further, it is a point that the code table that has been prepared, provides a simple rule for finding a codeword in the bit stream. In the example indicated here, there exists such a simple rule. Let us assume that codeword no. n has been found in the bit stream, and we wish to find codeword no. (n+1):

- if the first bit is 1, this is simply the next codeword, namely simply 1.
- if the first bit that is read, is 0, pairs of two bits are read, until the last bit read is 1. Then, the full codeword (n+1) has been found.

This provides a so-called "self synchronizing" code, because the code now has the quality that the reading of the bit stream quickly gets into the correct "rhythm" again after a situation where an error has been introduced in the bit stream. If the above mentioned bit stream is used as an example, one may introduce an error where bit no. 3 in the stream is changed from 0 to 1: The bit stream including the error is then (1 1 101 01001 011 1 00001). Using the above mentioned decoding rule in this bit stream, the following codewords will be found: (1 1 1 0101001 011 1 00001). It appears that codeword no. 3 and 4 are erroneous due to the error in the transfer (i.e. 1 and 0101001 instead of 001 and 01001). But after this, the codewords are correct again. Such a quick repair justifies the designation "self synchronizing").

In fig. 4 appears an alternative code table, with a similar structure as the code table shown in fig. 3, however, somewhat "scrambled" with regard to the occurrence of zeros and ones. This table has many favorable qualities similar to the table shown in fig. 3, among other things it has a certain symmetry that can be utilized in certain cases. But the VLC in fig. 4 is an example of a non-selfsynchronizing VLC.

Using only one single VLC results in the following clear advantages:

- encoding and decoding of bit streams will be simpler than when using a number of VLCs, since there is only need of one single rule regarding how to create and decode bit streams (as opposed to many rule sets, depending on which parameter is to be encoded/decoded),
- when the single VLC that is used, is well structured like in the above example, the encoding/decoding rule will be particularly simple. (As previously mentioned, in other previously known methods, several operations must be executed to ascertain if a codeword has been found),
- due to the fact that there is only one VLC, the decoder may at first decode a number of codewords from the bit stream (e.g. for a complete picture), thereafter to run through the interpretation of all codewords for the complete picture. This is not possible in the previously known methods, since there are many VLCs, and there is only an interpretation of earlier codewords that can decide which VLC should be used next time,
- if errors should appear in the bit stream, the use of a self-synchronizing VLC will make it possible to re-locate the correct codeword just after the location of occurrence of the error. If the rest of the encoding method has been set up in a special manner, this means that there exists a possibility to "save" valid information right after the error location. As previously mentioned, this is not quite so simple in the previously known methods, in which certain synchronizing words first must be found in the bit stream, before it is possible to start again utilizing the rest of the bit stream.

The class of encoders described above, will often be called hybrid encoders, since they partly establish a predictor and partly encode the deviation from the prediction. In this picture encoding, every picture to be encoded is divided in a number of blocks of a given size, such as mentioned previously. For every block a prediction is established using blocks in one or several earlier encoded pictures, as well as vector values indicating where to fetch, in earlier pictures, data for the prediction. In the simplest case one single block from the one previous picture is used, as a prediction block for the current block. The vector value will then simply be a number indicating the movement in the picture from the prediction block in the previous picture, to the current block in the current picture. (In addition, it is possible to use more vector parameters than one, for instance horizontal and vertical movement can be described using respective vector parameters).

Since the current block is not necessarily quite similar to the prediction (prediction block) that has been established, the difference or the deviation between the prediction and the current block is then calculated. This deviation is then subjected to a suitable mathematical transformation, and transform coefficients are obtained that provide a basis for definition of a favorable parameter for describing the deviation of interest.

Next, the information is completed by establishing further parameters describing various supplementary information for the current picture, like e.g. which blocks are at all different from the corresponding block in the previous picture, and which blocks contain information in addition to the prediction.

Thus, as a result, the digital picture or video sequence will be described by means of a number of different parameters.

The values that can be adopted by each of the parameters, are then encoded using one and the same VLC.

In other words, only one set of codewords exists in the method of the invention. However, in order that only one VLC shall be used, the description of every single parameter must then necessarily be adapted/modified, in particular with regard to the occurrence probabilities for the values, so that the values or events of the parameter are suitable for encoding by means of this single VLC. When talking about "adaptation/modification", one must of course also include the case that adaptation is not necessary, since of course it will be a point that at least one of the parameter descriptions in question will form a basis for set-up of the VLC of interest, and therefore does in reality not need "adaptation".

Further, "adaptation" means e.g. that one parameter value will occur at a probability of about 50%, and other values will occur with decreasing probability - typically 10-20% and lower. A model will also be regarded as suitably well adapted, if the parameters requiring largest capacity in the bit stream, like e.g. vector parameter and coefficient parameter, are adapted to one and the same VLC. It does not mean much if a parameter that shall only be assigned a value a small number of times in a picture, has a statistics that is not equally well adapted to the VLC. An example of a parameter to be assigned a value only once per picture, may be the picture format, to be indicated once in the picture header.

There must exist an unambiguous translation from codeword to parameter value or event for each parameter to be described.

For the rest, one may imagine a modification or generalization of the requirement regarding "one and the same VLC", in that for instance there is used instead a certain code selected among a predetermined group of codes.

In certain places in a picture sequence a unique codeword will be inserted. This may be at the start of a picture sequence, at the start of a picture, or pictures may even be divided in such a manner that there are several such unique codewords per picture. The purpose is that these unique codes are "entry" points so that it is possible to start decoding over, even if the previous bits were missed - for instance because bit errors arose and it was appropriate to jump forward to a new "entry" point. This unique codeword is called a synchronization word, and forms the start of a "header" that contains superior data to be used during further decoding - for example how many pixels a picture consists of horizontally and vertically, and how this picture comes in time compared to the previous picture.

This "header" information can usually be encoded using the same single VLC as the rest of the picture parameters. On the other hand, the encoder as well as the decoder will be in a particular state when processing a synchronization word. One may then possibly be able to retain the advantages mentioned previously, namely

- simpler decoding using one VLC,
- a well-structured VLC,
- decoding of the complete picture prior to interpreting the codes, and
- quick entry into correct rhythm after an error bit

for all practical purposes, even if some parameters are encoded, in connection with synchronization words, using other VLCs or FLCs than the above mentioned single VLC. For example, it may be of interest to encode a parameter containing a time reference for the picture, and which may e.g. assume values from 0 to 255 - all values having the same probability. This parameter might be encoded using an 8 bit FLC in the picture header. The decoder would then be expected to receive and interpret all information in a header prior to continuing decoding the main part of the picture information.

**Claims**

1. A method for compressing pictures and video sequences in a digital format, wherein

- each picture (10) to be encoded, is divided into a number of blocks (20) of a given size,
- for each block (20), a prediction is established using blocks (2) in one or several, earlier encoded pictures (1) and values for at least one vector parameter (V) indicating a location in earlier pictures (1) for fetching data for the prediction,
- for each block (20), a deviation from the prediction (2) is established, said deviation is subjected to a suitable mathematical transformation resulting in transform coefficients to be included in a definition of a parameter for a complete description of the deviation,
- further parameters are established for describing supplementary information for the picture, including which blocks (20) in the picture are different from a corresponding block in the previous picture (1), and which blocks have information in addition to the prediction, and
- among said parameters, values of the vector parameter, the deviation parameter and possibly at least one of said further parameters are then encoded using Variable Length Coding (VLC encoding), said vector parameter, said deviation parameter and said possible at least one parameter constituting a group having a number N of parameters,

**characterized in that**

- every single one of the N parameters are at first, if necessary, adapted for an encoding regime having only one single Variable Length Code (VLC), and
- the values that can be adopted by each of these N parameters, are encoded using this single VLC.

**2.** The method of claim 1, **characterized in that** a code table

$$1$$

$$0, x_0, 1$$

$$0, x_1, 0, x_0, 1$$

$$0, x_2, 0, x_1, 0, x_0, 1$$

$$0, x_3, 0, x_2, 0, x_1, 0, x_0, 1$$

$$0, x_4, 0, x_3, 0, x_2, 0, x_1, 0, x_0, 1$$

etc.

is used as a VLC, wherein parameter values for all parameters of interest can be represented by means of a horizontal string from the table, in accordance with a predetermined assignment list, and wherein $x_n$ (n=0,1,2, .....) can assume values 0 and 1.

**3.** The method of claim 1, **characterized in that** acodetable

$$1$$

$$0, x_0, 0$$

$$0, x_1, 1, x_0, 0$$

$$0, x_2, 1, x_1, 1\ x_0,\ 0$$

$$0, x_3, 1, x_2, 1, x_1, 1, x_0, 0$$

$$0, x_4, 1, x_3, 1, x_2, 1, x_1,\ 1, x_0, 0$$

etc.

is used as a VLC, wherein parameter values for all parameters of interest can be represented by means of a horizontal string from the table, in accordance with a predetermined assignment list, and wherein $x_n$ (n=0,1,2, .....) can assume values 0 and 1.

**4.** The method of claim 1, **characterized in that**, in addition to the codewords from said single VLC, a relatively low number of codewords representing parameter values in connection with synchronizing information are introduced, said codewords representing synchronization parameter values being based on an other type of coding.

**Patentansprüche**

**1.** Verfahren zum Komprimieren von Bildern und Videosequenzen im digitalen Format, wobei

- jedes zu codierende Bild (10) in eine Anzahl von Blöcken (20) von vorgegebener Größe geteilt wird,
- für jeden Block (20) eine Voraussage getroffen wird, wobei Blöcke (2) in einem oder mehreren, vorher kodierten Bildern (1) und Werte für mindestens einen Vektorparameter (V) unter Angabe einer Stelle in vorherigen Bildern (1) zum Abrufen von Daten für die Voraussage verwendet werden,
- für jeden Block (20) eine Abweichung von der Voraussage (2) festgestellt wird, wobei die Abweichung einer geeigneten mathematischen Transformierung unterworfen wird, was dazu führt, daß Transformierungskoeffizienten in eine Definition eines Parameters für eine vollständige Beschreibung der Abweichung aufgenommen werden,
- weitere Parameter zur Beschreibung von ergänzenden Informationen für das Bild aufgestellt werden, auch dazu, welche Blöcke (20) in dem Bild sich von einem entsprechenden Block in dem vorherigen Bild (1) unterscheiden, und welche Blöcke Informationen zusätzlich zu der Voraussage aufweisen, und
- unter den Parametern Werte des Vektorparameters, des Abweichungsparameters und gegebenenfalls mindestens einer von den weiteren Parametern dann mit Hilfe der Codierung variabler Längen (VCL-Kodierung) verschlüsselt werden, wobei der Vektorparameter, der Abweichungsparameter und der mögliche mindestens eine Parameter eine Gruppe mit einer Anzahl N an Parametern bilden,

**dadurch gekennzeichnet, daß**

- jeder einzelne von den N Parametern bei Bedarf zuerst für ein Codierungsregime mit nur einem einzigen Kode variabler Länge (VCL) angepaßt wird, und
- die Werte, jeder dieser N Parameter annehmen kann, mit Hilfe dieses einzigen VCL codiert werden.

2. Verfahren nach Anspruch 1,
**dadurch gekennzeichnet, daß** eine Codetabelle

$$1$$
$$0, x_0, 1$$
$$0, x_1, 0, x_0, 1$$
$$0, x_2, 0, x_1, 0, x_0, 1$$
$$0, x_3, 0, x_2, 0, x_1, 0, x_0, 1$$
$$0, x_4, 0, x_3, 0, x_2, 0, x_1, 0, x_0, 1$$
$$\text{usw.}$$

als VLC verwendet wird, wobei Parameterwerte für alle betreffenden Parameter mit Hilfe einer horizontalen Kette aus der Tabelle gemäß einer vorgegebenen Zuordnungsliste dargestellt werden können, und wobei $x_n$ ($n = 0,1,2, .....$) die Werte 0 und 1 annehmen kann.

3. Verfahren nach Anspruch 1,
**dadurch gekennzeichnet, daß** eine Codetabelle

$$1$$
$$0, x_0, 0$$
$$0, x_1, 1, x_0, 0$$
$$0, x_2, 1, x_1, 1, x_0, 0$$
$$0, x_3, 1, x_2, 1, x_1, 1, x_0, 0$$

$$0, x_4, 1, x_3, 1, x_2, 1, x_1, 1, x_0, 0$$

usw.

als VLC verwendet wird, wobei Parameterwerte für alle betreffenden Parameter mit Hilfe einer horizontalen Kette aus der Tabelle gemäß einer vorgegebenen Zuordnungsliste dargestellt werden können, und wobei $x_n$ (n = 0,1,2, .....) die Werte 0 und 1 annehmen kann.

4.  Verfahren nach Anspruch 1,
    **dadurch gekennzeichnet, daß** zusätzlich zu den Codewörtern aus dem einzelnen VCL eine relativ niedrige Anzahl von Codewörtern eingeführt werden, die Parameterwerte in Verbindung mit Synchronisierungsinformationen darstellen, wobei die Codewörter Synchronisierungsparameterwerte darstellen, die auf einer anderen Codierungsart basieren.

**Revendications**

1.  Procédé de compression d'images et de séquences vidéo dans un format digital, dans lequel
    chaque image (10) à encoder est subdivisée en un certain nombre de blocs (20) d'une dimension donnée,
    pour chaque bloc (20), est établie une prédiction en utilisant des blocs (2) situés dans une ou plusieurs images (1) encodées précédemment, et des valeurs pour au moins un paramètre de vecteur (V) indiquant un emplacement dans les images précédentes (1) pour aller chercher les données pour la prédiction,
    pour chaque bloc (20), est établi un écart par rapport à la prédiction (2), ledit écart est soumis à une transformation mathématique appropriée résultant en coefficients de conversion à inclure dans une définition d'un paramètre pour une description complète de l'écart,
    d'autres paramètres sont établis pour décrire une information supplémentaire pour l'image, y compris quels blocs (20) dans l'image sont différents d'un bloc correspondant dans l'image précédente (1), et quels blocs disposent d'une information s'ajoutant à la prédiction, et
    parmi lesdits paramètres, sont alors encodées des valeurs du paramètre de vecteur, du paramètre d'écart et éventuellement d'au moins un desdits autres paramètres en utilisant un codage à longueur variable (encodage VLC = « Variable Length Coding »), ledit paramètre de vecteur, ledit paramètre d'écart et ledit paramètre éventuel au moins présent constituant un groupe ayant un nombre N de paramètres,
    **caractérisé en ce que**
    chacun des N paramètres uniques sont d'abord, si nécessaire, adaptés pour un régime d'encodage ayant seulement un code unique de longueur variable (VLC), et
    les valeurs qui peuvent être adoptées par chacun de ces N paramètres sont encodées en utilisant cet unique VLC.

2.  Procédé de la revendication 1,
    **caractérisé en ce qu'**une table de codes

$$1$$
$$0, x_0, 1$$
$$0, x_1, 0, x_0, 1$$
$$0, x_2, 0, x_1, 0, x_0, 1$$
$$0, x_3, 0, x_2, 0, x_1, 0, x_0, 1$$
$$0, x_4, 0, x_3, 0, x_2, 0, x_1, 0, x_0, 1$$

etc.

est utilisée comme un VLC, dans lequel des valeurs des paramètres pour tous les paramètres ayant un intérêt peuvent être représentées au moyen d'une suite horizontale venant de la table, selon une liste d'affectations pré-

déterminée, et dans lequel $x_n$ (n=0, 1, 2, ...) peut prendre les valeurs 0 et 1.

3. Procédé de la revendication 1,
   **caractérisé en ce qu'**une table de codes

```
              1
     0,  x₀,  0
     0,  x₁,  1,  x₀,  0
     0,  x₂,  1,  x₁,  1,  x₀,  0
     0,  x₃,  1,  x₂,  1,  x₁,  1,  x₀,  0
     0,  x₄,  1,  x₃,  1,  x₂,  1,  x₁,  1,  x₀,  0
                   etc.
```

est utilisée comme un VLC, dans lequel des valeurs des paramètres pour tous les paramètres ayant un intérêt peuvent être représentées au moyen d'une suite horizontale venant de la table, selon une liste d'affectations prédéterminée, et dans lequel $x_n$ (n=0, 1, 2, ...) peut prendre les valeurs 0 et 1.

4. Procédé de la revendication 1,
   **caractérisé en ce que**, en plus des mots de code venant dudit VLC unique, sont introduits des mots de code en un nombre relativement faible représentant des valeurs de paramètres en liaison avec une information de synchronisation, lesdits mots de code représentant des valeurs de paramètres de synchronisation étant basés sur un autre type de codage.

## <u>Fig. 1</u>

## <u>Fig. 2</u>

| Probability | Event, Parameter E | Codeword table 1 (VLC) | Codeword table 2 (2-bit FLC) | Codeword table 3 (8-bit FLC) |
|---|---|---|---|---|
| Highest | $E_0 \rightarrow$ | 1 | 00 | 00000000 |
| Second highest | $E_1 \rightarrow$ | 01 | 01 | 00000001 |
| Second lowest | $E_2 \rightarrow$ | 001 | 10 | 00000010 |
| Lowest | $E_3 \rightarrow$ | 0001 | 11 | 00000011 |

## Fig. 3

| Code table | Table written out | Event, Parameter E |
|---|---|---|
| 1 | 1 | ← $E_0$ |
| 0, $x_0$, 1 | 0, 0, 1 | ← $E_1$ |
| 0, $x_1$, 0, $x_0$, 1 | 0, 1, 1 | ← $E_2$ |
| 0, $x_2$, 0, $x_1$, 0, $x_0$, 1 | 0, 0, 0, 0, 1 | ← $E_3$ |
| 0, $x_3$, 0, $x_2$, 0, $x_1$, 0, $x_0$, 1 | 0, 0, 0, 1, 1 | ← $E_4$ |
| 0, $x_4$, 0, $x_3$, 0, $x_2$, 0, $x_1$, 0, $x_0$, 1 | 0, 1, 0, 0, 1 | ← $E_5$ |
| .      .      .      etc. | 0, 1, 0, 1, 1 | ← $E_6$ |
| | 0, 0, 0, 0, 0, 0, 1 | ← $E_7$ |
| | etc. | etc. |

etc.

## Fig. 4

| Code table | Table written out | Event, Parameter E |
|---|---|---|
| 1 | 1 | ← $E_0$ |
| 0, $x_0$, 0 | 0, 0, 0 | ← $E_1$ |
| 0, $x_1$, 1, $x_0$, 0 | 0, 1, 0 | ← $E_2$ |
| 0, $x_2$, 1, $x_1$, 1, $x_0$ 0 | 0, 0, 1, 0, 0 | ← $E_3$ |
| 0, $x_3$, 1, $x_2$, 1, $x_1$, 1, $x_0$, 0 | 0, 0, 1, 1, 0 | ← $E_4$ |
| 0, $x_4$, 1, $x_3$, 1, $x_2$, 1, $x_1$, 1, $x_0$, 0 | 0, 1, 1, 0, 0 | ← $E_5$ |
| .      .      .      etc. | 0, 1, 1, 1, 0 | ← $E_6$ |
| | 0, 0, 1, 0, 1, 0, 0 | ← $E_7$ |
| | etc. | etc. |

etc.